# EUROPEAN PATENT APPLICATION

(11) **EP 4 636 667 A1**
(43) Date of publication of application: **22.10.2025**
(21) Application number: 25167327.3
(22) Date of filing: 31.03.2025
(51) Int. Cl.: G06Q 10/0833, G06K 17/00, G06Q 10/087, G06K 7/10, G06Q 10/08

(54) **METHODS AND SYSTEMS OF INVENTORY TRACKING AND CONTROL**

(30) Priority: 19.04.2024 US 202418641171
(71) Applicant: T-Mobile Innovations LLC, Overland Park, KS 66251-2100 (US)
(72) Inventor: BUTLER, Robert Keith, Overland Park, 66210 (US); HOU, Pei, Centreville, 20120 (US); PACZKOWSKI, Lyle, Mission Hills, 66208 (US)
(74) Representative: Suddaby, Mark Edward

(57) **Abstract**

A method comprises determining, by an inventory application of an inventory system, one or more clusters of items based on a location of each of the items, in which a cluster of the one or more clusters comprises a subset of the items located within a distance from a centroid location, determining, by the inventory application, cluster data describing the cluster and the subset of items in the cluster, emitting, by an antenna, signals towards the cluster based on the centroid location, adjusting, by the inventory application, a reader device setting of the reader device based on the cluster data and predictive model, and receiving, by the reader device, the cluster-focused data from the tags coupled to the subset of total items included in the cluster.

## Description

### CROSS-REFERENCE TO RELATED APPLICATIONS

None.

### STATEMENT REGARDING FEDERALLY SPONSORED RESEARCH OR DEVELOPMENT

Not applicable.

### REFERENCE TO A MICROFICHE APPENDIX

Not applicable.

### BACKGROUND

In a warehouse inventory system, the process typically begins when items arrive from suppliers and enter the warehouse. Upon arrival, items may be scanned and tagged with Radio-Frequency Identification (RFID) tags, which contain unique identifiers and other data describing the respective items. These RFID tags are used for real-time tracking and management of the items entering the warehouse. The items may then move through the warehouse via conveyor belts, be stored within the warehouse for a period of time, and exit the warehouse for delivery to an end-destination. RFID readers may be strategically placed throughout the warehouse and along the conveyor belts to read information about the item from the tag and update the inventory database in real-time.

### SUMMARY

A method performed by an inventory system to perform inventory tracking and control in a warehouse is disclosed. The method comprises emitting, by an antenna system of the inventory system, first signals into an area of the warehouse that comprises a plurality of items each coupled to tag, receiving, by a reader device of the inventory system, data from each tag coupled to the items and including information related to a location of each of the items, and determining, by an inventory application executing on a computer of the inventory system and communicatively coupled to the reader device, one or more clusters of items based on the location of each of the items, in which a cluster of the one or more clusters comprises a subset of the items located within a distance from a centroid location. The method further comprises determining, by the inventory application, cluster data describing the cluster and the subset of items in the cluster, adjusting, by the inventory application, an antenna setting of at least one antenna in the antenna system based on the cluster data and a predictive model to emit cluster-focused signals towards the cluster, emitting, by the at least one antenna of the antenna system, the cluster-focused signals towards the cluster based on the centroid location and the predictive model, adjusting, by the inventory application the reader device based on the cluster data, the adjustment to the antenna setting, and the predictive model, and receiving, by the reader device, cluster-focused data from the tags coupled to the subset of items in the cluster.

In another embodiment, a method performed by an inventory system to perform inventory tracking and control in a warehouse is disclosed. The method comprises receiving, by a reader device of the inventory system, data from a plurality of tags coupled to a plurality of items moving along a conveyor belt in the warehouse, in which the data includes information related to a location of each of the items, and determining, by an inventory application executing on a computer system of the inventory system and communicatively coupled to the reader device, one or more clusters of items based on the location of each of the items, in which a cluster of the one or more clusters comprises a subset of the items located within a distance from a centroid location. The method further comprises determining, by the inventory application, cluster data describing the cluster and the subset of items in the cluster, emitting, by at least one antenna of an antenna system, signals towards the cluster based on the centroid location, adjusting, by the inventory application, a reader device setting of the reader device based on the cluster data and predictive model to optimize cluster-focused data received from the tags coupled to the subset of items in the cluster, and receiving, by the reader device, the cluster-focused data from the tags coupled to the subset of items in the cluster. The reader device setting comprises at least one of a type of the signals, a frequency range of the signals, a position of the reader device, directional settings of the antenna systems, or an output power of the reader device.

In yet another embodiment, an inventory system is disclosed. The inventory system discloses a reader device configured to receive data from a plurality of tags coupled to a plurality of items moving along a conveyor belt in a warehouse, in which the data includes the information related to a location of each of the items, at least one processor, at least one memory coupled to the processor, an inventory application, and at least one antenna. The inventory application is communicatively coupled to the reader device and stored in the at least one memory, which when executed by the at least one processor, causes the processor to be configured to determine one or more clusters of items based on the location of each of the items, wherein a cluster of the one or more clusters comprises a subset of the items located within a distance from a centroid location, and determine cluster data describing the cluster and the subset of items in the cluster. The at least one antenna is configured to emit signals towards the cluster based on the centroid location and a predictive model. The inventory application further causes the processor to be configured to adjust a reader device setting of the reader device based on the cluster data and a predictive model to optimize cluster-focused data received from the tags coupled to the subset of items in the cluster, wherein the reader device setting comprises at least one of a type of cluster-focused signals to receive and process, a frequency range of the cluster-focused signals, a position of the reader device, directional settings of the antenna system, or an output power of the reader device. The reader device is configured to receive the cluster-focused data from the tags coupled to the subset of items in the cluster.

These and other features will be more clearly understood from the following detailed description taken in conjunction with the accompanying drawings and claims.

### BRIEF DESCRIPTION OF THE DRAWINGS

For a more complete understanding of the present disclosure, reference is now made to the following brief description, taken in connection with the accompanying drawings and detailed description, wherein like reference numerals represent like parts.
FIG. 1 is a block diagram of an inventory system implemented in a warehouse according to various embodiments of the disclosure.
FIG. 2A is a diagram illustrating the inventory system of FIG. 1 implemented in an area of a warehouse with stationary and mobile items according to various embodiments of the disclosure.
FIG. 2B is a diagram illustrating the inventory system of FIG. 1 implemented in a region of the warehouse with stationary items according to various embodiments of the disclosure.
FIG. 2C is a diagram illustrating the inventory system of FIG. 1 implemented in a region of the warehouse with mobile items according to various embodiments of the disclosure.
FIG. 2D is a diagram illustrating the inventory system of FIG. 1 implemented in a region of the warehouse with items positioned on a pallet according to various embodiments of the disclosure.
FIGS. 3A and 3B are message sequence diagrams illustrating communications between the components of the inventory management system of FIG. 1 to perform inventory tracking and control according to various embodiments of the disclosure.
FIG. 4 is a flowchart illustrating a first method of performing inventory tracking and control according to various embodiments of the disclosure.
FIG. 5 is a flowchart illustrating a second method of performing inventory tracking and control according to various embodiments of the disclosure
FIG. 6 is a block diagram of a computer system implemented within the communication system of FIG. 1 according to an embodiment of the disclosure.

### DETAILED DESCRIPTION

It should be understood at the outset that although illustrative implementations of one or more embodiments are illustrated below, the disclosed systems and methods may be implemented using any number of techniques, whether currently known or not yet in existence. The disclosure should in no way be limited to the illustrative implementations, drawings, and techniques illustrated below, but may be modified within the scope of the appended claims along with their full scope of equivalents.

As mentioned above, inventory systems track and manage the items coming into the warehouse, being stored at the warehouse, and delivered out of the warehouse using RFID tags. Antennas and/or reader devices may be positioned throughout the warehouse to emit radio frequency signals into a region of the warehouse and receive data back from the RFID tags. The RFID tags within the range of the radio frequency signals may receive the signals and use the energy from the signals to obtain enough power to send data back to reader devices (e.g., in the case of a passive RFID tag without a power source). Active RFID tags may have a power source and thus, may transmit data back to the reader devices without necessarily being prompted to do so with radio frequency signals. Once powered up, the RFID tags may send data, such as a unique identifier of the RFID tag (sometimes referred to herein as simply a "tag"), to a reader device. The reader device may capture the sent data and forward the data to a host computer or storage information system for processing. Tracking the items using the RFID tags helps maintain accurate records of the quantity and location of each product in the inventory, which may be used to prevent stockouts or overstock situations. Accurate tracking also provides a clear record of when items enter or leave the warehouse, and enables efficient order fulfillment, such that the system can quickly identify the location of each item, streamlining the packing and shipping process.

In some cases, inventory systems may manage the inventory based on groups of one or more items, in which the items are bundled or packaged together, to be stored and subsequently shipped together. In such cases, each item may be tagged with RFID tags (also referred to herein as simply "tags") and then packaged together into a box or a tote. When the tags are used to track the storage and/or movement of multiple items packaged together, it may sometimes be difficult to accurately distinguish one package of multiple items from another package of items. This may be partly because most antennas and/or reader devices are mounted in fixed locations in the warehouse with fixed configurations and settings, such that the antennas and/or reader devices may not be adjusted or moved ad hoc. For example, the packages of items may be randomly positioned throughout the warehouse and/or on conveyor belts, sometimes overlapping one another, such that the reader devices may not be able to distinguish which items are in which packages. Moreover, the current state of the inventory system may simply be to track and store data regarding the past and current positionings of the items in a package, but there may be no method to detect when items are missing or incorrectly added to a package.

Therefore, operators at the warehouse may have to manually use a handheld reader device to scan stored items within a package to detect each item in a package and to avoid interference from other items in a different package. Alternatively, scanning checkpoints may be implemented and enforced within the warehouses, for example, along conveyor belts within the warehouse. Each checkpoint may include an isolation zone with dedicated antennas and/or reader devices, in which each package of items may have to pass through the isolation zone individually to ensure that all items within the package are scanned and to limit interference from the tags on other items within other packages on the conveyor belt. To this end, each package may be spaced apart at least by a predefined distance to ensure that only one package is positioned within an isolation zone at a time during scanning. Therefore, the manual scanning or use of the isolation zone is largely inefficient, in that ultimately more antennas and reader devices may have to be deployed in the warehouse, resulting in a high processing and communications load in the warehouse. Moreover, physical structures may have to be built in the warehouse to secure the antennas and reader devices within the isolation zones.

In addition, the settings of the antennas and/or reader devices within warehouses may be relatively fixed, such that the antennas and/or reader devices communicate with the tags blindly, with no knowledge of the items or package of items. For example, the antennas and reader devices use the same types of signals (e.g., radio frequency signals, WiFi signals, etc.) regardless of whether the items are being pushed through the warehouse individually or in a package, or regardless of the type or material of the items. Similarly, the antennas and reader devices use same frequency ranges for all types of items, again regardless of whether the items are being pushed through the warehouse individually or in a package, or regardless of the type or material of the items. The antennas and reader devices may be set to the same power level for all types of devices (resulting in a corresponding emission/read range) regardless of the material of the items, even though certain materials affect the range that the tags have data transmission (e.g., metal items may have a shorter range). Therefore, the fixed configuration and programming of the antennas and/or reader devices in the inventory system may be highly inefficient, ultimately consuming more resources in the inventory system, thereby reducing the processing and network capacity in the inventory system and slowing down operations in the warehouse.

The present disclosure addresses the foregoing technical problems by providing a technical solution in the technical field of inventory tracking, control, and management, by intelligently identifying packages of items (hereinafter referred to as "clusters" of items) and dynamically adjusting the antenna and/or reader device configurations to enable more efficient and optimized communications between the antennas, the tags, and/or the reader devices. The embodiments presented herein are directed to the technical purpose of more accurately tracking and maintaining the location of items in a warehouse. As further described herein, this may be achieved by configuring reader devices in specific ways and/or adjusting antennas in specific ways based on a general knowledge of items moving or being stored in the warehouse and based on historical data describing the antennas, reader devices, and/or items previously located in the warehouse.

In an embodiment, the inventory systems disclosed herein perform inventory tracking, control, and management by deploying multiple reader devices, and in some cases, multiple antenna systems in various areas of a warehouse. The inventory system may include antenna devices and/or reader devices (as either separate or integrated devices), which communicate with tags that are attached to the items entering the warehouse. The tags may be, for example, RFID tags, but may also be other types of tags configured to communicate with the antenna system and/or the reader devices. In an embodiment, the one or more reader devices may be programmable, such that the settings or configuration of the reader devices may be dynamically and programmatically adjusted ad-hoc based on the items or clusters of items entering the warehouse and moving through the regions of the warehouse. The settings and configurations may be adjusted based on the attributes of the items (e.g., type of item, material of item, speed of item, direction of movement, size of item, etc.) and/or attributes of the cluster (e.g., quantity of items in the cluster). In an embodiment, the antenna system may include one or more antennas, the settings of which may be configurable based on the items entering the warehouse and moving through the areas and attributes of the items or cluster of items. The reader device settings and the antenna settings may also be configurable based on a predictive machine learning model (or "predictive model") trained using historical data describing prior settings of the antennas and/or reader devices and prior item storage/movement records.

In an embodiment, one or more reader devices may include two different types of functionalities. In an embodiment, the reader device may first perform a general scan of a large area of the warehouse, which may include multiple regions within the warehouse, multiple conveyor belts which move through the regions within the warehouse, and even loading trucks or shipment trucks that carry the items. After the general scanning, the reader device may perform more focused scans of one or more clusters stored or moving within the warehouse. In another embodiment, multiple different reader devices may perform these two types of scans (e.g., a first reader device performs the first general scan, and a second reader device performs the second low level scan).

To perform the general scan, an antenna of the antenna system may first broadcast signals through the large area of the warehouse. The signals may have particular characteristics that facilitate broad transmission throughout the large area. For example, the antenna may be an omnidirectional antenna or an antenna array with multiple beams, scattering the signals in all directions, and as such this antenna may be positioned in the center of the large area. The antenna may also transmit these signals over, for example, lower frequency channels (e.g., at a lower frequency) that tend to propagate better and scatter more broadly. The tags located within the large area may be configured to receive these signals over the lower frequency channels and reflect or transmit data back up to the one or more reader devices in response to the receiving the signals (or periodically, not necessarily in response to the lower frequency signals). The data may be transmitted through similar lower frequency channels. For example, the data may include an identification of the tag and item data, which may include the information related to a location of the tag (i.e., used to determine a location of the item coupled to the tag), an identification of the material of an item coupled to the tag, identification of the item, etc. The reader device may be configured to detect or receive this data, in some cases, only along a particular channel (e.g., only through low-frequency channels), depending on whether the reader device may also be used to receive other types of signals.

The reader device may decode the data and then send the data to an inventory application in a storage server of the inventory system. The storage server may store inventory-related data describing the items, antennas, and reader devices in the warehouse. The inventory application may identify the clusters of items within the larger area of the warehouse. A cluster of items may refer to the aforementioned package including multiple items that may be packaged or grouped together for storage at the warehouse and/or shipment from the warehouse.

In an embodiment, the inventory application may identify the cluster of items based on the location data of the items received from the tags using a predictive model, which may include, for example, a k-means algorithm. The predictive model may receive the location data for each of the tags as input. The predictive model may use this location data and/or historical data related to previously identified clusters in the warehouse to identify the clusters of items within the large area of the warehouse.

Once the clusters have been identified, the inventory application may also obtain cluster data describing a cluster as a whole, each of the items in the cluster and, in some cases, commonalities between the items in the cluster. For example, the cluster data may include the location data of each of the items, the material of each of the items, identification data of each of the items (e.g., item name, item manufacturer, serial number, expiration date), security data (e.g., security keys), links to other databases, etc. The cluster data may also include a quantity of items in the cluster based on a quantity of tags from which data was received. The cluster data may also include movement data, describing a direction and/or speed of movement of the cluster within the large area of the warehouse. The inventory application may also generate a cluster identifier uniquely identifying the cluster.

After obtaining the data from the higher-level general scan, the reader devices (e.g., the same reader device or a different reader device) may be tuned based on the data to optimize communications between the reader devices and the tags. In an embodiment, the inventory application may determine dynamic adjustments to the antennas and/or reader devices based on the identified clusters and corresponding cluster data. For example, the inventory application may determine, from the movement data in the cluster data and the item data, that the cluster is likely to continue moving along a path, possibly along one or more other conveyor belts to reach a particular region of the warehouse for storage. The inventory application may instruct one or more antennas along this path to adjust an antenna setting such that cluster-focused signals may be emitted by the antenna primarily directed toward the cluster. For example, the antenna settings may include at least one of the cluster-focused signals, a type of the cluster-focused signals, a frequency range of the cluster-focused signals, a position of the at least one antenna, an orientation of the at least one antenna, an antenna gain of the at least one antenna, a transmit power of the at least one antenna, or any other type of antenna setting. Similarly, the inventory application may instruct one or more reader devices along this path to adjust reader device settings such that cluster-focused signals may be detected and received by the reader devices. For example, the reader device setting may include a type of the cluster-focused signals, the frequency range of the cluster-focused signals, the position of the reader device, directional settings of the antenna system connected to the reader device, the output power of the reader device, or any other type of reader device setting.

In an embodiment, the inventory application may also use the predictive model to determine dynamic adjustments to the antennas and/or reader devices. In this case, the predictive model may be trained based on historical data related to items stored and moving through the warehouse and warehouse data describing a layout of the warehouse. The historical data may be trained with known patterns between items and clusters of items being stored in certain areas of the warehouse and moved through the warehouse in certain paths through specific regions/zones of the warehouse. The historical data may indicate various combinations of prior settings or attributes of the antennas and reader devices that, when configured a particular way, resulted in efficient and accurate communications between the antennas, tags, and reader devices.

For example, the inventory application may determine based on the predictive model trained using the historical data that the reader devices should be adjusted to a particular power level and corresponding read range when receiving data from tags coupled to items of a particular material (e.g., metal). The inventory application may instruct the reader devices within a vicinity or projected movement path of the cluster including the item of the material to be powered according to the particular power level. The reader devices may adjust the power levels to the prescribed level when the cluster with a particular material is predicted to be scanned by the reader devices. Similarly, the inventory application may determine based on the machine learning model trained using the historical data that the reader devices should be oriented such that the receiver is faced at a particular angle relative to a movement path of a cluster. The inventory application may instruct the reader devices on the movement path, and may even control a robotic arm coupled to the reader devices on the movement path, to change the angle or orientation of the reader device and/or robotic arm to adjust settings/configurations based on the cluster coming along the movement path. The reader devices and/or robotic arms may automatically adjust the position and angle settings based on the instructions.

In an embodiment, the inventory application may also determine dynamic adjustments to the antennas and/or reader devices based on both the machine learning model and the cluster data of the identified clusters. This may result in even more accurate adjustments to the antennas and reader devices in the inventory system, particularly being that the machine learning model has been trained in some cases using thousands if not millions of data points, to most accurately capture the antenna settings and reader device settings used to optimize communications with tags. The machine learning model may also update the historical data as items get stored and move through the warehouse to further train the model for accuracy and completeness.

In some cases, items may be collected for shipment and placed in a box on a pallet, which may be positioned in a staging area lined up with a garage door, ready to be loaded onto a shipment truck. Each pallet may be destined for a different location, and the system may maintain pallet data including data describing the known clusters of items that are to be placed on particular pallets to be loaded onto corresponding shipment trucks. The reader devices may receive data from the clusters on each of the pallets, and send this data to the inventory application. The inventory application may compare the actual received data from the clusters on each of the pallets with the clusters that should be included on each of the pallets as indicated in the pallet data to identify whether the items and clusters on the pallet are correct. The inventory application may detect that certain clusters are missing from a box on the pallet or incorrectly included in a box on the pallet, to ensure that clusters are not inadvertently shipped to the wrong destinations. This also helps ensure that clusters of items that are to be packaged and shipped together are not missing individual items, prior to being shipped to the destination.

In an embodiment, the inventory application may also perform error detection using the machine learning model. For example, the inventory application may compare known cluster data describing the items that should be included in certain clusters with the actual items included in clusters as the clusters move through the warehouse. For example, the inventory application may compare item data of the items in the cluster with item data of the known cluster data to determine whether items are incorrectly included in the cluster or missing from the cluster. Similarly, the inventory application may compare a quantity of items in the cluster with the known quantity of items in the cluster to determine whether the cluster includes too few or too many items. In this way, the inventory application may use the known cluster data to identify errors in the clusters moving through and being stored in the network.

The embodiments disclosed herein enable a much more advanced inventory tracking and control system, with dynamic antennas and reader devices that may be configured ad-hoc based on the attributes of clusters of items and based on machine learning models. This enables the inventory tracking and control system to operate much more efficiently with far greater accuracy. Also, by performing the further optimization of each individual cluster in time sequence, the reader devices are much less likely to pick up interfering signals when focusing on communicating with a specific cluster. This in turn reduces noise between clusters without needing to create isolation zones in the warehouse.

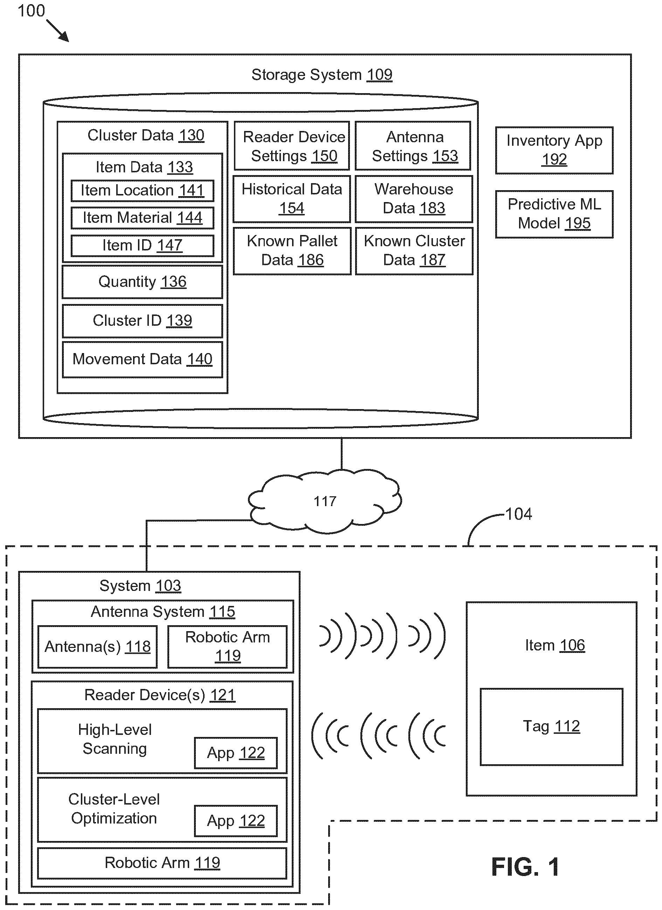

Turning now to FIG. 1, an inventory system 100 is described. The inventory system 100 includes a system 103 positioned at a warehouse 104, items 106 being stored and moving through a warehouse 104, a storage system 109, and a network 117. The network 117 may be one or more private networks, one or more public networks, or a combination thereof. While the storage system 109 is shown as separate from the network 117 in FIG. 1, in other embodiments, the network 117 may include the storage system 109.

The system 103 includes an antenna system 115 and reader devices 121. While FIG. 1 depicts the antenna system 115 and reader devices 121 as separate, it should be appreciated that the reader devices 121 and the antenna system 115 (or antennas 118) may also be integrated in a single device with the capabilities of both an antenna 118 and a reader device 121.

The antenna system 115 may include one or more antennas 118, which may be embodied as antenna arrays or separate standalone antennas 118, with multiple different antenna elements. The antennas 118 may emit or transmit signals to the tags 112 coupled to the items 106 to communicate with the tags 112. The signals may be, for example, radio frequency signals, WiFi signals for wireless networks, BLUETOOTH signals for short-range communications, ZIGBEE signals for low-power, short-range data transfers, etc. It should be appreciated that the antennas 118 may transmit any type of signal depending on the technologies and devices used for warehouse management, such as wireless networks, handheld scanners, or sensor devices. The antennas 118 may be any type of antenna, such as, for example, an omnidirectional antenna or a directional antenna. The antennas 118 may have different shapes and sizes and include one or more different elements based on the specific functionality of the antenna 118. The antennas 118 may include various beamforming mechanisms to adjust the amplitude and phases of signals from different antenna elements to emit the signals as directional beams. The warehouse 104 may include different types of antennas 118 positioned at various areas of the warehouse 104.

In an embodiment, the antenna system 115 may also include one or more robotic arms 119. A robotic arm 119 may be detachably attached or coupled to one or more of the antennas 118 in the antenna system 115. The robotic arm 119 may include links intercoupled by joints, controllable by a separate controller, which may be operable by a human user or by an application at the storage system 109. One or more antennas 118 may be coupled to a distal end of the robotic arm 119, and the controller may control movement of the links and joints on the robotic arm 119 to ultimately control the movement, angle, direction, and positioning of the one or more antennas 118 attached to the robotic arm 119.

The reader devices 121 may be electronic devices or computing systems configured to receive data back from the tags 112 coupled to the items 106. The reader device 121 may also be detachably attached to a robotic arm 119 to control the movement, angle, direction, and positioning of the reader device 121. The reader devices 121 may detect and receive responses from the tags 112, decode the information in the responses, and extract specific data to transmit to the storage system 109 over the network 117. To this end, each reader device may include an application 122. The application 122 may include instructions stored on a memory of the reader device 121, which when executed by a processor, cause the processor to be configured to obtain (e.g., decode and extract) data from the signals received from the tags 112 and transmit the data to the storage system 109.

The reader devices 121 within the warehouse 104 may include two types of functionalities, i.e., high-level general scanning and cluster-level optimization. The reader device may first perform a general scan of a large area of the warehouse 104 to define the clusters of the items within the warehouse 104. After the high-level scanning, the reader devices 121 may perform further optimization for each individual cluster in time sequence, or the reader devices 121 may perform simultaneously further optimization of multiple clusters using antenna array with multiple beams. The large area of the warehouse 104 may include multiple areas, multiple conveyor belts, and/or multiple clusters of items moving through the warehouse 104 and/or stored on racks in the warehouse 104. As described herein, the reader devices 121 may be configured to detect and receive signals from all of the tags 112 in the large area, in some cases, through a specific frequency channel and/or based on a specific type of signal. The application 122 at the reader devices 121 may decode the received signal, extract certain types of data, and send the data to the storage system 109 via the network 117 for further processing.

After the high-level scanning, the reader devices 121 may be dynamically configured to focus on detecting and receiving data from particular clusters and/or regions within the warehouse 104. The reader devices 121 may detect and receive signals from the tags 112 of particular clusters on the items 106, in some cases, in smaller regions within the large area. For example, there may be multiple smaller regions (covered by multiple antenna systems 115) within the large area of the warehouse 104. The application 122 may decode the received signal from the subset of the tag 112, extract certain types of data, and send the data to the storage system 109 via the network 117 for further processing.

There may be multiple antenna systems 115 connected to the reader device 121 to cover the different regions of the warehouse. There also may be multiple reader devices 121 positioned at various points along different conveyor belts or at various intersections of the conveyor belts in the warehouse 104.

In an embodiment, the reader devices 121 may themselves include the antennas 118, such that the reader devices 121 may emit the signals and receive data back from the tags 112. In this case, the robotic arm 119 may be detachably attached to the reader device 121. However, in other cases, the antennas 118 and reader devices 121 may be completely separate devices, and this embodiment is illustrated in FIG. 1 for illustrative purposes only and to separate the description of the functionalities of the antennas 118 and the reader devices 121.

The items 106 may be any type of item/product/food/equipment, etc. that may be stored or moving through the warehouse 104. Each item 106 may be attached or coupled to a tag 112 prior to arrival, may be permanently attached or coupled to a tag 112 upon arrival, or may be detachably attached or coupled to a tag 112 upon arrival. For example, an operator at the warehouse 104 may affix the tag 112 to each item 106 entering the warehouse 104. The tags 112 are used for identification and tracking purposes, containing unique identifiers and data that may be wirelessly communicated with the reader devices 121. For example, the tags 112 may include an identifier of the tag 112, the information related to the location of the tag 112 (and thus the item 106), and some data identifying the item 106, such as, for example, a material of the item 106, an identification of the item 106, a serial number of the item 106, an expiration date of the item 106, a speed at which the item 106 is moving, a direction toward which the item 106 is moving, etc. The tags 112 may be any type of tag that may communicate with the antennas 118 and the reader devices 121. For example, the tags 112 may be RFID tags (active or passive), barcodes, QR codes, sensors, etc.

The storage system 109 may be a computer system, server software/hardware, or a collection of processors, memories, and/or networking resources, used to implement the inventory application 192 and in some cases, the predictive machine learning model 195 (also referred to herein occasionally as a "predictive ML model 195". In an embodiment, the storage system 109 may include the software and hardware resources to implement the predictive ML model 195 when the predictive ML model 195 is implemented at the storage system 109. However, in other cases, the predictive ML model 195 may be included in a separate server or system external to the storage system 109. In this case, the inventory application 192 may have access to the predictive ML model 195 stored on the external server or system.

As described herein, the inventory application 192 may include instructions stored on a memory of the storage system 109, which when executed by a processor of the storage system 109, causes the inventory application 192 to perform the steps described herein. For example, the inventory application 192 may determine clusters of items 106 in the warehouse 104, determine cluster data 130 describing the clusters, determining adjustments to the antennas 118 and/or reader devices 121 based on the cluster data 130 and/or the predictive ML model 195, and send instructions to adjust the antennas 118 and/or reader devices 121 accordingly.

The predictive ML model 195 may be implemented using software (e.g., algorithms, logic, and code) stored across memories, for example, in the storage system 109 or in an external system. The underlying hardware of the storage system 109 or the external system executing the predictive ML model 195 may provide the computational resources for execution of the predictive ML model 195. In an embodiment, the predictive ML model 195 may calculate the locations of each of the items 106 based on the data received from the tags 112, and include a k-means mode to execute a k-means algorithm based on the calculated locations of the items 106. In an embodiment, the predictive ML model 195 may be a type of machine learning model that leverages algorithms and statistical techniques to analyze input features, identify patterns, and generate predictions regarding adjustments to the settings or configurations of the antennas 118 and/or reader devices 121 to optimize inventory tracking and management at the warehouse 104. The predictive ML model 195 may be implemented as one or more different types of models using, for example, linear regression, decision trees, support vector machines, neural networks, or ensemble methods. It should be appreciated that any type of predictive model may be used, and the underlying algorithms, computations, and machine learning libraries used by the predictive ML model 195 should not be limited herein.

The predictive ML model 195 may be a computational system (e.g., including both software and hardware components) designed to make predictions or forecasts based on patterns or trends learned from the historical data 154. For example, the historical data 154 may indicate the frequency channels that, when used to transmit signals between the tags 112, antennas 118, and reader devices 121, resulted in the most efficient and accurate communications between the tags 112, antennas 118, and reader devices 121. The frequency channels may indicate different frequency ranges, or even certain licensed and unlicensed spectrum bands. The historical data 154 may indicate the types of signals that, when transmitted between the tags 112, antennas 118, and reader devices 121, resulted in the most efficient and accurate communications between the tags 112, antennas 118, and reader devices 121. The types of signals may include, for example, radio frequency signals, WiFi signals, or other types of signals, not limited herein. The historical data 154 may also indicate the transmit power level of the antennas 118 and reader devices 121 that enable the antennas 118 and reader devices 121 to emit and receive data accurately as expected. The historical data 154 may also indicate angles, azimuths, orientations, and/or directions of the antennas 118 and reader devices that resulted in the most accurate focusing and shaping of the range and field of emission and detection of signals. The historical data 154 may also indicate the antenna settings 153 and reader device settings 150 that most accurately and efficiently received signals and data from items 106 of certain materials (e.g., metals, food, plastic, cardboard, liquid, etc.).

The predictive ML model 195 may also be based on warehouse data 183, which may indicate a layout of the warehouse 104. For example, the warehouse data 183 may indicate locations of different conveyor belts, intersections of different conveyor belts, large areas, regions, and zones within the warehouse 104, pallet staging areas within the warehouse 104, and/or any other data describing locations at which items 106 may move through or be stored within the warehouse 104.

To this end, the predictive ML model 195 may be trained using historical data 154 related to past items 106 that have been stored and moved through the warehouse 104, past clusters of items 106 that have been stored and moved through the warehouse 104, the prior antenna settings 153 of the antennas 118, prior reader device settings 150 of the reader devices 121, movement paths of the past items 106, storage locations of the past items 106, warehouse data 183 describing a layout of the warehouse 104, etc. The predictive ML model 195 may also be trained with known data regarding present items 106 being stored and moved through the warehouse 104. The known data may include, for example, known cluster data 187 and known pallet data 186. The known cluster data 187 may include data describing the clusters of items 106 that should be stored and moving through the warehouse 104. The known pallet data 186 may include data describing the items 106 or clusters of items 106 that should be stored on certain pallets in the warehouse 104 and eventually loaded onto a specific shipment vehicle for shipping.

The storage system 109 may include one or more memories that may store the historical data 154, reader device settings 150, antenna settings 153, warehouse data 183, known cluster data 187, and known pallet data 186 (among other types of data). As mentioned above, the antenna settings 153 may include, for example, at least one of a type of the signals, the frequency range of the signals, the position of at least one antenna 118, the orientation of at least one antenna 118, the antenna gain of at least one antenna 118, the transmit power of at least one antenna 118, or any other type of antenna setting. The reader device setting 150 may include, for example, a type of the signals, the frequency range of the signals, the position of the reader device 121, directional settings of the antenna system 115 connected to the reader device 121, the output power of the reader device 121, or any other type of reader device setting.

In an embodiment, the inventory application 192 may use the data received from the reader devices 121 to identify clusters of items 106 and then determine cluster data 130 for each cluster of items 106. The cluster data 130 may include item data 133 describing the items 106 within each cluster, in which the item data 133 may include, for example, the information related to an item location 141, an item material 144, and an item identifier 147. The item location 141 may include the information related to a location of the item 106 (which may be used to determine the location of the item 106), the item material 144 may include data describing a material of the item 106, the item identifier 147 may uniquely identify the item (e.g., serial number). The cluster data 130 may also include a quantity 136 (or number) of items 106 included in each cluster. The cluster data 130 may also include a cluster identifier 139, which may be a value uniquely identifying each cluster. The cluster data 130 may also include movement data 140 when the cluster of items 106 is moving, in which the movement data 140 may identify a conveyor belt along which the cluster is moving, a direction in which the cluster is moving, and/or a speed at which the cluster is moving.

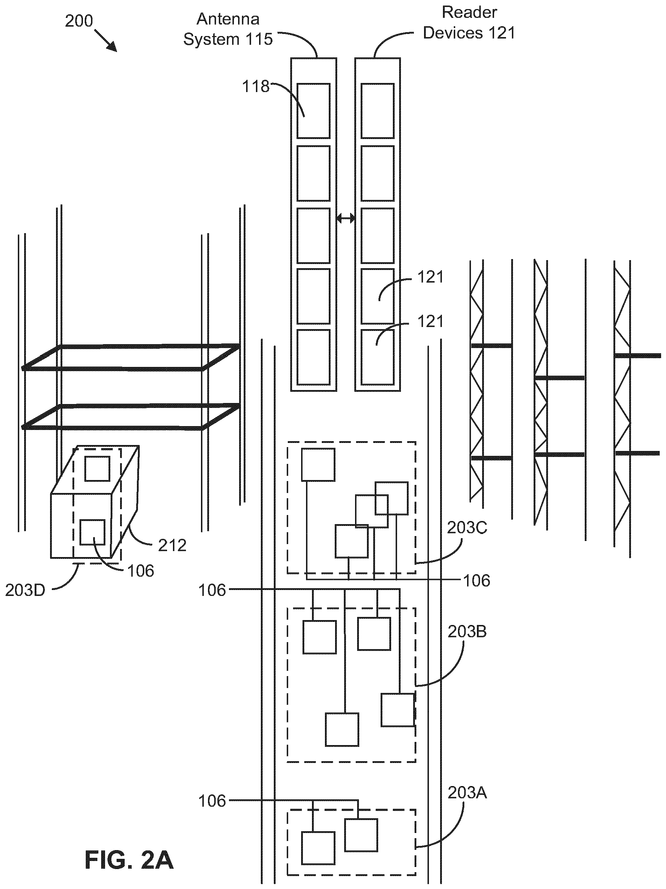

Referring now to FIGS. 2A-D, shown are diagrams illustrating areas or regions within the warehouse 104 including items 106 and clusters of items 106, detected using tags 112 on the items 106 by the reader devices 121 according to various embodiments of the disclosure. Turning now to FIG. 2A, shown is a large area 200 of the warehouse 104. The large area 200 of the warehouse 104 may include one or more conveyor belts, racks, pallets, etc. The large area 200 may include packages containing one or more items 106 or one or more clusters 203A-C of items 106, which may be moving along conveyor belts or positioned in boxes on a rack or pallet of the warehouse 104.

As shown in FIG. 2A, clusters 203A, 203B, and 203C may be moving along a conveyor belt of the warehouse 104, and clusters 203D may be stored in a box 212 on a rack of the warehouse 104. The box 212 may be a sturdy wooden box capable of securely holding multiple items 106 and clusters of items 106. Each of the clusters 203A-D contain multiple items 106. Each cluster 203A-D may package the items 106 in a tote, cardboard box, or any other type of packaging.

The antenna system 115 and reader devices 121 may be positioned throughout the large area 200 of the warehouse 104. FIG. 2A shows the antenna system 115 with multiple antennas 118 positioned in series and the reader devices 121 positioned in series, with both the antenna system 115 and reader devices 121 being positioned together. However, in some cases, the antennas 118 and the individual reader devices 121 may be positioned in different locations within the large area 200. In an embodiment in which there are two types of reader devices 121, a high-level reader device 121 may be mounted in a higher location relative to one or more of the lower-level reader devices 121.

FIG. 2A shows at least one reader device 121 connected to the antenna systems 115. However, it should be appreciated that there may be any number of reader devices 121 and antenna systems 115 covering the large area 200. The number of the reader devices 121 and antenna systems 115 depend on the size of the area 200.

As an illustrative example, suppose there are one or more antennas 118 in the large area 200 emitting specific types of signals to the tags 112. The tags 112 may detect these signals received from the antennas 118, and may reflect another similar or different type of signal back to the reader device 121 when the tags 112 are passive. The tags 112 may also transmit another similar or different type of signal back to the reader device 121 when the tags 112 are active. For example, the antennas 118 may emit RFID signals over a low-frequency channel, and the tags 112 may detect these RFID signals, which may trigger the tags 112 to send certain types of data back to the reader device 121. The certain types of data may include at least the item data 133 (including, for example, the information related to item location 141, item material 144, and item identifier 147). The tags 112 may send this data back up to the reader device 121 through a similar low-frequency channel or over a different channel. The reader device 121 may receive the data, the application 122 of the reader 121 may decode the data and then send the data to the inventory application 192 at the storage system 109.

As described herein, the inventory application 192 may use this data to calculate the locations of each item and then identify the clusters 203A-D of items 106 based on the calculated item locations using the predictive ML model 195. In an embodiment, the predictive ML model 195 may include a k-means algorithm. For example, the k-means algorithm itself may be a clustering algorithm used to partition the item locations of the items 106 into distinct, non-overlapping clusters 203A-D by initializing centroids and assigning each data point of the item locations to a cluster 203A-D with the nearest centroid, recalculating and repeating until convergence. In this way, the predictive ML model 195 may be used to identify clusters 203A-D with relatively close internal cohesion and significant separation between different clusters 203A-D.

The inventory application 192 may also obtain and store cluster data 130 from the data received from the reader 121. The inventory application 192 may then use the cluster data 130 and the trained predictive ML model 195 to make adjustments to the settings of other antennas 118 or reader devices 121. For example, the cluster data 130 may indicate that the cluster 203D is stationary and positioned on a first row of a rack in the large area 200, while the clusters 203A-C are moving along the conveyor belt. Specifically, the cluster data 130 may indicate that cluster 203C is first on the conveyor belt, then cluster 203B, then cluster 203A, such that as the conveyor belt moves through the warehouse, cluster 203C may be detected first, then cluster 203B, then cluster 203A.

In an embodiment, inventory application 192 may control the beams of the antenna system 115 to point to the different clusters 203A-D based on, for example, the locations of the clusters 203A-D. The inventory application 192 may switch the beam of the antenna system 115 to the direction of each individual cluster 203A-D in time sequence for further performance optimization of the clusters 203A-D. The inventory application 192 may also send instructions to the robotic arm 119 to adjust the direction of the antenna systems 115 to a specific cluster 203A-D. The inventory application 192 may send instructions to each of the reader devices 121 with the cluster identifier 139 of the assigned cluster 203A-D, such that the reader devices 121 may be then configured to only process data received from tags 112 of the assigned cluster 203A-D. The inventory application 192 may also send instructions to the reader devices 121 to adjust the reader device settings 150 of the reader devices 121 to an optimal position and angle to account for the items 106 in the assigned cluster 203A-D. The inventory application 192 may also send instructions to the reader devices 121 (and potentially to the tags 112) to communicate over a specific domain with specific types of signals and/or to communicate over a specific frequency channel, licensed spectrum, or unlicensed spectrum, for example.

In an embodiment, the inventory application 192 may also adjust antenna settings 153 to be best positioned and angled to account for the location of the stored or moving items 106 in the assigned cluster 203A-D. The antenna settings 153 may also include the positioning of a robotic arm 119 attached to the antenna 118, which may provide a greater angle and more degrees of freedom by which to change the angle and positioning of the antenna 118.

The antennas 118 and the reader devices 121 may correspondingly adjust the respective antenna settings 153 and/or reader device settings 150 based on the instructions received from the inventory application 192. The antennas 118 may then emit cluster-focused signals of a certain type (e.g., RFID, WiFi, etc.) and/or over a specific channel (e.g., at higher frequencies), directed toward a specific location and in some cases even moving with cluster 203A-D based on the instructions, to direct the cluster-focused signals to the specific cluster 203A-D. The tags 112 may receive the cluster-focused signals when the tag 112 is within a specific range of the antenna 118 emitting the cluster-focused signals, which in some cases may be based on the transmit power and beamforming capabilities of the antenna 118. The tags 112 may derive power from the cluster-focused signals to energize an antenna of the tag 112, modulate the signals, and transmit this modulated signal back to a reader device 121 as cluster-focused data. The cluster-focused data may include, for example, data identifying the item 106, such as, for example, a material of the item 106, an identification of the item 106, a serial number of the item 106, an expiration date of the item 106, a speed at which the item 106 is moving, a direction toward which the item 106 is moving, etc. The reader device 121 may transmit this cluster-focused data back to the inventory application 192, and the inventory application 192 may determine additional adjustments to the settings and configurations of other reader devices 121 and/or antennas 118 using the cluster focused data.

The adjusted reader device settings 150 and antenna settings 153 (including control of the robotic arm 119) along with the outcome of the adjusted settings 150 and 153 (i.e., whether the adjustments resulted in more optimized communications) may be recorded and used to further train the predictive ML model 195. For example, the reader device 121 may collect data related to whether the adjusted angle or orientation of the reader device 121 enabled the reader device 121 to be within reading range of the assigned cluster 203A-D, and send this data back to the inventory application 192. The inventory application 192 may provide this data as input into the predictive ML model 195 to further train the data points in the model 195.

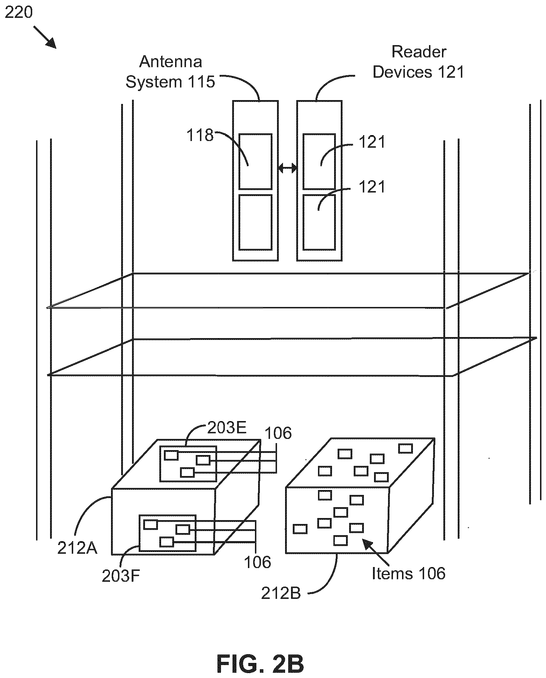

Turning now to FIG. 2B, shown is a region 220 within the large area 200 of the warehouse 104. The region 220 may include an antenna system 115 including antennas 118 and reader devices 121. The antennas 118 and reader devices 121 may be set to have an emission and/or read range that covers the region 220.

Specifically, FIG. 2B shows the antenna system 115 and reader devices 121 as being located to communicate with stationary items 106. The items 106 or clusters 203E and 203F of items 106 may be placed in boxes 212A and 212B. For example, the antenna 118 and reader device 121 may be assigned (by the inventory application 192) to communicate only with (or only process communications from) items 106 in the clusters 203E-F in box 212A and the items 106 in box 212B.

The antenna 118 may receive instructions from the inventory application 192 to adjust the antenna settings 153 (or control the robotic arm 119) based on the cluster data 130 and/or the predictive ML model 195. The antenna 118 may adjust the antenna settings 153 and/or robotic arm 119 based on the instructions. The reader device 121 may also receive instructions from the inventory application 192 to adjust the reader device settings 150 (or control the robotic arm 119) based on the cluster data 130 and/or the predictive ML model 195. The reader device 121 may adjust the reader device settings 150 and/or robotic arm 119 based on the instructions.

The antenna 118 may then emit cluster-focused signals into the region 220, in which the cluster-focused signals may be a particular type of signal communicated over a particular channel, as indicated in the instructions received from the inventory application 192. The tags 112 may then receive the cluster-focused signals and transmit back cluster-focused data, which may be received by the reader device 121. The cluster focused data may indicate additional details about the data or the region 220, rack, and/or box in which the items 106 and clusters 203E-F are stored.

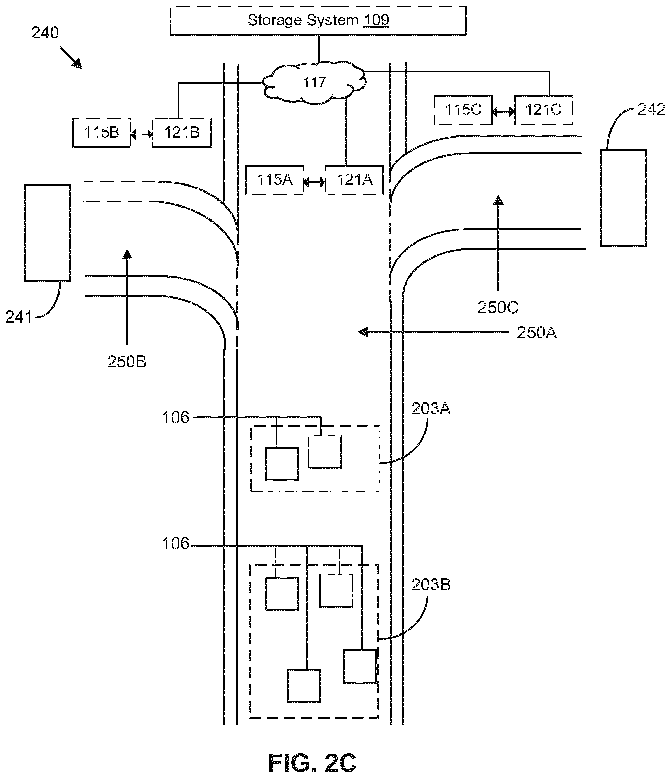

Turning now to FIG. 2C, shown is another region 240 within the large area 200 of the warehouse 104. The region 240 may include an antenna system 115 including antennas 118 and reader devices 121.

The region 240 may include multiple conveyor belts 250A-C. As shown in FIG. 2C, the conveyor belts 250B and 250C each interconnect with the conveyor belt 250A. For example, the clusters 203A-B of items 106 may be moving down the conveyor belt 250A, and cluster 203A may be expected to be moved onto the conveyor belt 250B (either manually or robotically), while the cluster 203B may be expected to be moved onto the conveyor belt 250C (either manually or robotically).

Each of the conveyor belts 250B and 250C may direct the clusters 203A-B towards different zones 241 and 242 of the warehouse 104. The zone 241 may be designated specifically for certain types of items 106 destined for a certain type of destination (e.g., retail store or customer), while the zone 242 may be designated specifically for other types of items 106 destined for another type of destination. To this end, the items 106 in cluster 203A may be related to the types of items 106 stored in zone 241, while the items 106 in cluster 203B may be related to the types of items 106 stored in zone 242.

The region 240 may include different sets of antenna systems 115A-C and reader devices 121A-C for each of the different conveyor belts 250A-C and/or the different zones 241 and 242. As shown in FIG. 2C, an antenna system 115A and corresponding reader device 121A may be positioned in a specific location relative to the conveyor belt 250A, an antenna system 115B and corresponding reader device 121B may be positioned in a specific location relative to the conveyor belt 250B (and/or zone 241), and an antenna system 115C and corresponding reader device 121C may be positioned in a specific location relative to the conveyor belt 250C (and/or zone 242).

The antenna system 115A and the reader device 121A may have previously received instructions from the inventory application 192 to focus on the clusters 203A and 203B moving down the conveyor belt 250A based on, for example, movement data 140 indicating a speed and direction of the moving clusters 203A and 203B. The antenna system 115A may adjust the antenna settings 153 based on the instructions and then may emit cluster-focused signals generally directed to the expected positioning of the clusters 203A and 203B on the conveyor belt 250A. The reader devices 121A may adjust the reader device settings 150 based on the instructions according to the expected positioning of the clusters 203A and 203B on the conveyor belt 250A to obtain cluster-focused data back from the tags 112.

The inventory application 192 may first detect the movement of the cluster 203A to the conveyor belt 250B then detect the movement of the cluster 203B to the conveyor belt 250C based on data received from the reader device 121A. The inventory application 192 may create movement data 140 indicating the detected movements of the specific cluster 203A, which may be used to generate instructions for adjustments to antenna systems 115B-C and reader devices 121B-C.

The inventory application 192 may send instructions to the antenna system 115B and the reader devices 121B to adjust the antenna settings 153 of the antenna system 115B and/or the reader device settings 150 of the reader devices 121B based on the movement data 140 of cluster 203A, other cluster data 130 of the cluster 203A, and the predictive ML model 195. For example, the instructions may instruct the antenna system 115B and the reader device 121B to adjust an angle or orientation of one or more antennas 118 in the antenna system 115B.

Similarly, the inventory application 192 may send instructions to the antenna system 115C and the reader device 121C to adjust the antenna settings 153 of the antenna system 115C and/or the reader device settings 150 of the reader devices 121C based on the movement data 140 of cluster 203B, other cluster data 130 of the cluster 203B, and the predictive ML model 195. For example, the instructions may instruct the antenna system 115C and the reader device 121C to adjust an angle or orientation of one or more antennas 118 in the antenna system 115C.

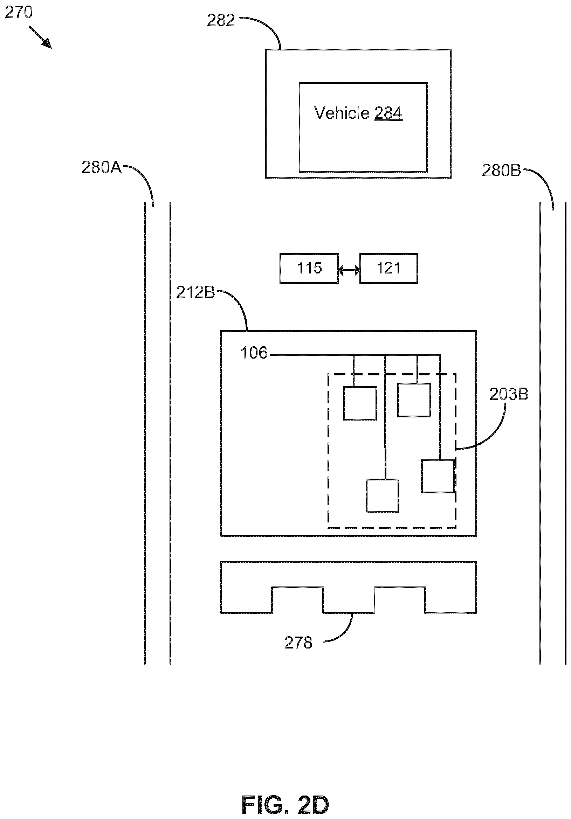

Turning now to FIG. 2D, shown is another region 270 within the large area 200 of the warehouse 104. The region 270 may include an antenna system 115 including antennas 118 and reader devices 121. The antennas 118 and reader devices 121 may be set to have an emission and/or read range that covers the region 270 or a portion of the region 270.

The region 270 may be a region of the warehouse 104 in which items 106 or clusters 203A-F of items, such as cluster 203B shown in FIG. 2D, are placed on a pallet 278, or in a box that is positioned on a pallet 278. A pallet 278 may be a flat wooden platform that is used to hold batches of items 106 or clusters 203B of items 106 in a warehouse 104. Boxes, cartons, and packages placed on pallets 278 may be considered ready to ship to a destination.

Within the warehouse 104, different pallets 278 may be lined up in between two physical (e.g., painted) lines 280A and 280B positioned on the floor of the warehouse 104. The physical lines 280A-B may also line up with a garage door 282 of the warehouse 104, which may open and close to permit entry and exit of shipment vehicles 284. The shipment vehicles 284 lined up with pallet 278 in between lines 280A-B may be specifically destined for the shipment of the items 106 and clusters of items 106 positioned on the pallet 279.

The antenna system 115 may emit signals into the region 270, which may trigger the tags 112 of the items 106 on the pallet 278 to send back data to the reader devices 121. The data may include, for example, item data 133 describing the items 106 in the cluster 203B and/or a quantity of items 106 in the cluster 203B. The reader devices 121 may send the data back to the inventory application 192. The storage system 109 may store known pallet data 186, which may indicate items 106 and clusters of items 106 that should be positioned on a particular pallet 278, destined to be shipped to a particular shipment location. The inventory application 192 may compare the received data from the tags 112 with the known pallet data 186 indicating the clusters 203B that should be included on each of the pallets 278 to confirm whether the items 106 and clusters 203 on the pallet 278 are actually ready to ship. For example, the inventory application 192 may detect that certain clusters 203B are missing from a box 212B on the pallet 278 or incorrectly included in a box 212B on the pallet 278.

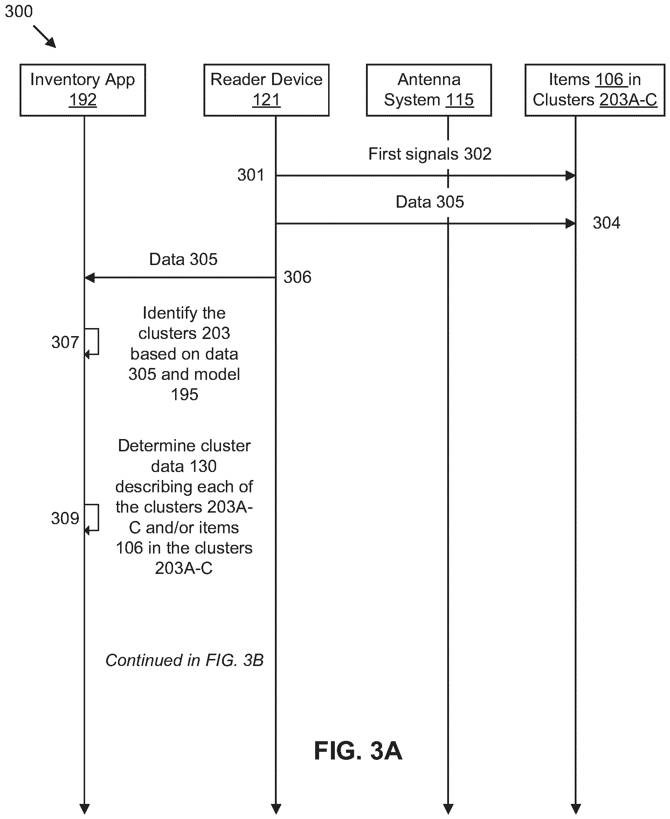

Referring now to FIGS. 3A-B, shown is a message sequence diagram illustrating method 300 performed by the antenna system 115, reader devices 121, and tags 112 on items 106 in the warehouse 104. Turning, specifically now to FIG. 3A, method 300 begins with step 301. At step 301, the antenna system 115, or one or more antennas 118 in the antenna system 115, may emit first signals 302 across multiple items 106 in multiple different clusters 203A-C in a large area 200 of the warehouse 104. The signals 302 are the query signals for the tags. The tags 112 can be either passive or active tags. For passive tags, these signals 302 are also used for energy harvesting. The tags 112 send the data 305 back to the reader device 121 through backscattered signals. For active tags, they have their own power source and can transmit the signals directly to the reader device 121.

At step 304, the tags 112 may generate data 305, which may include the item data 133 and/or movement data 140 when applicable (for example, items 106 entering the warehouse or moving into different regions of the warehouse). In response to the first signals 302, the tags 112 may send back the data 305 to the reader device 121 through back-scattering if tags 112 are passive or by direct transmission if the tags 112 are active. At step 306, the reader device 121 may decode the data 305 and send the data 305 to the inventory application 192 at the storage system 109.

At step 307, the inventory application 192 may identify the clusters 203A-F (hereinafter referred to as "clusters 203") using the predictive ML model 195 (e.g., a k-means algorithm) based on the data 305. The data 305 may include the information related to item locations 141 of the items 106 located in the large area 200 of the warehouse 104, and the information related to item locations 141 may be provided as input into the predictive ML model 195 to output the clusters 203 and corresponding centroid locations of each cluster 203.

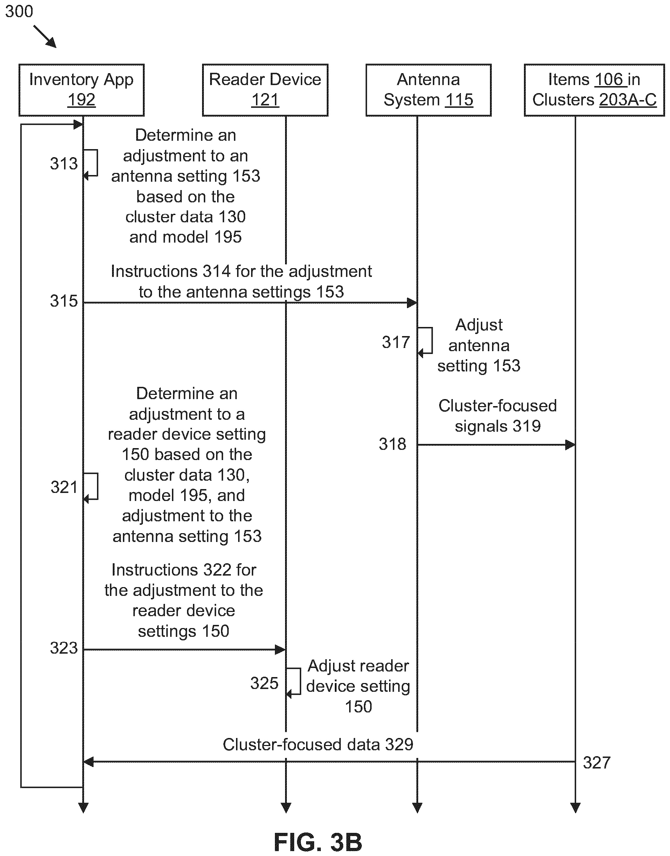

At step 309, the inventory application 192 may determine the cluster data 130 describing each cluster 203 as a whole, the items 106 within the cluster 203, and/or commonalities between the items 106 in the cluster 203. The cluster data 130 may include the data 305 received from the tags 112, such as the item data 133 and/or the movement data 140. The item data 133 may include the information related to item locations 141, the item materials 144, and the item identifiers 147, and the movement data 140 may include a direction and/or speed of movement of the cluster 203. The inventory application 192 may additionally determine the quantity 136 of items 106 in the cluster 203, and obtain (determine or generate) a cluster identifier 139 of the cluster 203. As shown in FIG. 3A, the remainder of method 300 is shown in FIG. 3B and described below.

Referring now to FIG. 3B, method 300 continues with step 313. At step 313, the inventory application 192 may determine an adjustment to the antenna settings 153 (or link/joint setting of the robotic arm 119) based on the cluster data 130 and/or the predictive ML model 195. At step 315, the inventory application 192 may send instructions 314 for the adjustment to the antenna settings 153 (or link/joint setting of the robotic arm 119) to the antenna system 115, or directly to the antenna 118. At step 317, the antenna system 115 or the antenna 118 may adjust the antenna setting 153 according to the instruction 314. The antenna system 115 or the antenna 118 may then be programmed and configured to send cluster-focused signals 319 to the items 106 in a specific cluster 203 or clusters 203, at step 318.

While the inventory application 192 performs steps 313 and 315 to generate the instructions 314 to adjust the antenna settings 153, the inventory application 192 may also perform steps 321 and 323 to adjust the reader device settings 150 for the reader device(s) 121. At step 321, the inventory application 192 may determine an adjustment to the reader device settings 150 (or link/joint setting of the robotic arm 119) based on the cluster data 130, the predictive ML model 195, and/or the adjustment to the antenna settings 153. At step 323, the inventory application 192 may send instructions 322 for the adjustment to the reader device settings 150 (or link/joint setting of the robotic arm 119) to one or more reader devices 121. At step 325, the reader devices 121 may adjust the reader device settings 150 according to the instruction 322. The reader devices 121 may then be programmed and configured to receive cluster-focused data 329 from the tags 112 in a specific cluster 203, at step 327.

As described above, method 300 illustrates an example in which the inventory application 192 adjusts the settings of the antenna system 115 and the reader device 121. However, both the antenna system 115 and the reader device 121 may not be adjusted together. For example, in some cases only the antenna system 115 may be adjusted, and in other cases only the reader devices 121 may be adjusted.

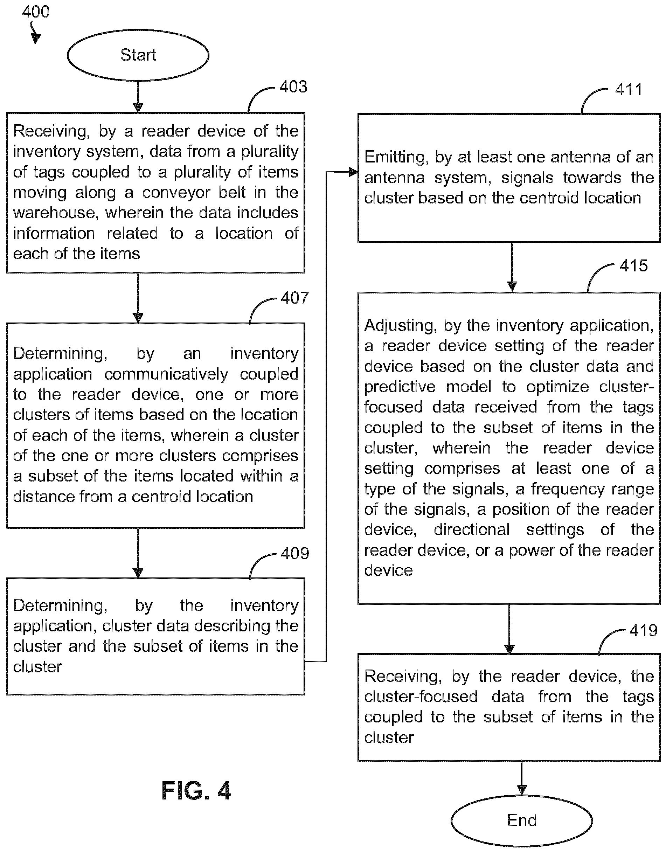

Referring now to FIG. 4, shown is a method 400. Method 400 may be implemented by the antenna system 115, reader devices 121, and storage system 109 of the inventory system 100 of FIG. 1. Method 400 may be performed after the reader devices 121 have been mounted and configured according to the embodiments disclosed herein.

At step 403, method 400 may comprise receiving, by a reader device 121 of the inventory system 100, data 305 from a plurality of tags 112 coupled to a plurality of items 106 moving along a conveyor belt 250A-C (or being stored in boxes 212A and 212B) in the warehouse 104, in which the data 305 includes the information related to an item location 141 of each of the items 106. In some embodiments, method 400 may comprise determining, by an inventory application 192 communicatively coupled to the reader device, the locations of the items based on data 305. At step 407, method 400 may comprise determining, by an inventory application 192 communicatively coupled to the reader device 121, one or more clusters 203 of items 106 based on the calculated item locations. A cluster 203 of the one or more clusters 203 comprises a subset of the items 106 located within a distance (e.g., a close, proximate distance within a predefined distance range) from a centroid location.

At step 409, method 400 may comprise determining, by the inventory application 192, cluster data 130 describing the cluster 203 and the subset of items 106 in the cluster 203. At step 411, method 400 comprises emitting, by at least one antenna 118 of an antenna system 115, signals 319 (i.e., cluster-focused signals 319) towards the cluster 203 based on the centroid location based on instructed antenna settings by the inventory application 192. At step 415, method 400 may comprise adjusting, by the inventory application 129, a reader device setting 150 of the reader device 121 based on the cluster data 130 and a predictive ML model 195 to optimize cluster-focused data 329 received from the tags 112 coupled to the subset of items 106 in the cluster 203. The reader device setting 150 comprises at least one of a type of signals 319, a frequency range of the signals, a position of the reader device 121, directional settings of the antenna system 115 connected to the reader device 121, or an output power of the reader device 121. Method 400 may further comprise receiving, by the reader device 121, instructions from the inventory application 192 to make the corresponding adjustments based on the reader device setting 150. At step 419, method 400 may comprise receiving, by the reader device 121, the cluster-focused data 329 from the tags 112 coupled to the subset of items 106 in the cluster 203, and forwarding, by the reader device 121, the cluster-focused data 329 to the inventory application 192.

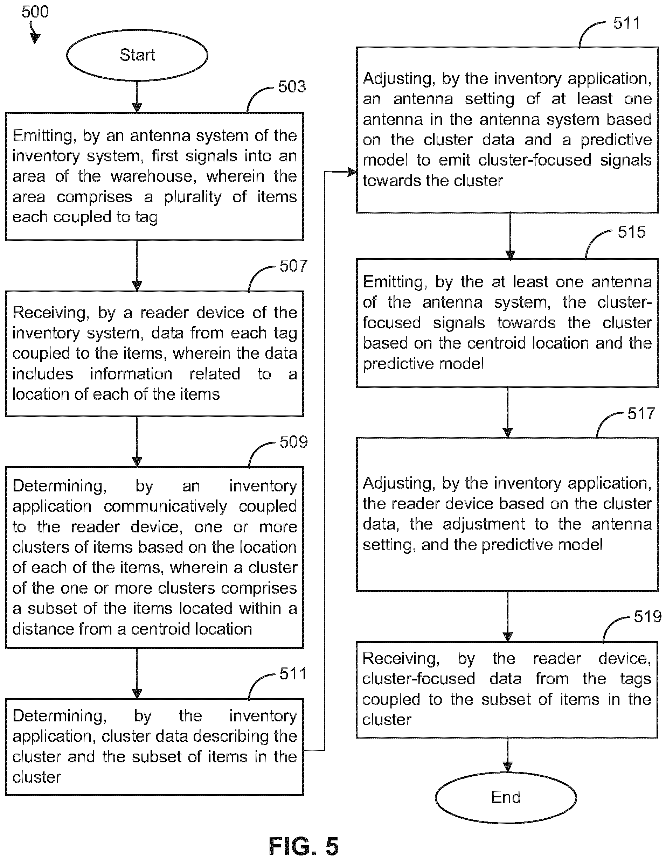

Referring now to FIG. 5, shown is a method 500. Method 500 may be implemented by the antenna system 115, reader devices 121, and storage system 109 of the inventory system 100 of FIG. 1. Method 500 may be performed after the reader devices 121 have been mounted and configured according to the embodiments disclosed herein.

At step 503, method 500 may comprise emitting, by an antenna system 115 of the inventory system 100, first signals 302 into an area (e.g., large area 200) of the warehouse 104. The area 200 comprises a plurality of items 106 each coupled to tag 112. At step 507, method 500 may comprise receiving, by a reader device 121 of the inventory system 100, data 305 from each tag 112 coupled to the items 106, in which the data 305 indicates an item location 141 of each of the items 106. In some embodiments, method 500 may comprise determining, by an inventory application 192 communicatively coupled to the reader device, the locations of the items 106 based on data 305. At step 509, method 500 may comprise determining, by an inventory application 129 communicatively coupled to the reader device 121, one or more clusters 203 of items 106 based on the item locations 141. A cluster 203 of the one or more clusters 203 comprises a subset of the items 106 located within a distance from a centroid location.

At step 511, method 500 may comprise determining, by the inventory application 129, cluster data 130 describing the cluster 203 and the subset of items 106 in the cluster 203. At step 513, method 500 may comprise adjusting, by the inventory application 192, an antenna setting 153 of at least one antenna 118 in the antenna system 115 based on the cluster data 130 and a predictive ML model 195 to emit cluster-focused signals 319 towards the cluster 203.

At step 515, method 500 may comprise emitting, by the at least one antenna 118 of the antenna system 115, the cluster-focused signals 319 towards the cluster 203 based on the centroid location and the predictive ML model 195. At step 517, method 500 may comprise adjusting, by the inventory application 192 communicatively coupled to a reader device 121, a reader device setting 150 of the reader device 121 based on the cluster data 130, the adjustment to the antenna setting 153, and the predictive ML model 195 to optimize cluster-focused data 329 received from the tags 112 coupled to the subset of items 106 in the cluster. At step 519, method 500 may comprise receiving, by the reader device 121, the cluster-focused data 329 from the tags 112 coupled to the subset of items 106 in the cluster 203, and forwarding the data to the inventory application 192.

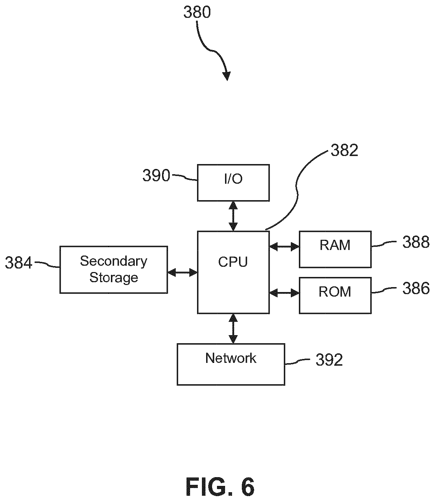

FIG. 6 illustrates a computer system 700 suitable for implementing one or more embodiments disclosed herein. In an embodiment, the storage system 109 and/or reader devices 121, etc., may each be implemented as the computer system 700. The computer system 700 includes a processor 382 (which may be referred to as a central processor unit or CPU) that is in communication with memory devices including secondary storage 384, read only memory (ROM) 386, random access memory (RAM) 388, input/output (I/O) devices 390, and network connectivity devices 392. The processor 382 may be implemented as one or more CPU chips.

It is understood that by programming and/or loading executable instructions onto the computer system 700, at least one of the CPU 382, the RAM 388, and the ROM 386 are changed, transforming the computer system 700 in part into a particular machine or apparatus having the novel functionality taught by the present disclosure. It is fundamental to the electrical engineering and software engineering arts that functionality that can be implemented by loading executable software into a computer can be converted to a hardware implementation by well-known design rules. Decisions between implementing a concept in software versus hardware typically hinge on considerations of stability of the design and numbers of units to be produced rather than any issues involved in translating from the software domain to the hardware domain. Generally, a design that is still subject to frequent change may be preferred to be implemented in software, because re-spinning a hardware implementation is more expensive than re-spinning a software design. Generally, a design that is stable that will be produced in large volume may be preferred to be implemented in hardware, for example in an application specific integrated circuit (ASIC), because for large production runs the hardware implementation may be less expensive than the software implementation. Often a design may be developed and tested in a software form and later transformed, by well-known design rules, to an equivalent hardware implementation in an application specific integrated circuit that hardwires the instructions of the software. In the same manner as a machine controlled by a new ASIC is a particular machine or apparatus, likewise a computer that has been programmed and/or loaded with executable instructions may be viewed as a particular machine or apparatus.

Additionally, after the system 700 is turned on or booted, the CPU 382 may execute a computer program or application. For example, the CPU 382 may execute software or firmware stored in the ROM 386 or stored in the RAM 388. In some cases, on boot and/or when the application is initiated, the CPU 382 may copy the application or portions of the application from the secondary storage 384 to the RAM 388 or to memory space within the CPU 382 itself, and the CPU 382 may then execute instructions that the application is comprised of. In some cases, the CPU 382 may copy the application or portions of the application from memory accessed via the network connectivity devices 392 or via the I/O devices 390 to the RAM 388 or to memory space within the CPU 382, and the CPU 382 may then execute instructions that the application is comprised of. During execution, an application may load instructions into the CPU 382, for example load some of the instructions of the application into a cache of the CPU 382. In some contexts, an application that is executed may be said to configure the CPU 382 to do something, e.g., to configure the CPU 382 to perform the function or functions promoted by the subject application. When the CPU 382 is configured in this way by the application, the CPU 382 becomes a specific purpose computer or a specific purpose machine.

The secondary storage 384 is typically comprised of one or more disk drives or tape drives and is used for non-volatile storage of data and as an over-flow data storage device if RAM 388 is not large enough to hold all working data. Secondary storage 384 may be used to store programs which are loaded into RAM 388 when such programs are selected for execution. The ROM 386 is used to store instructions and perhaps data which are read during program execution. ROM 386 is a non-volatile memory device which typically has a small memory capacity relative to the larger memory capacity of secondary storage 384. The RAM 388 is used to store volatile data and perhaps to store instructions. Access to both ROM 386 and RAM 388 is typically faster than to secondary storage 384. The secondary storage 384, the RAM 388, and/or the ROM 386 may be referred to in some contexts as computer readable storage media and/or non-transitory computer readable media.

I/O devices 390 may include printers, video monitors, liquid crystal displays (LCDs), touch screen displays, keyboards, keypads, switches, dials, mice, track balls, voice recognizers, card readers, paper tape readers, or other well-known input devices.

The network connectivity devices 392 may take the form of modems, modem banks, Ethernet cards, universal serial bus (USB) interface cards, serial interfaces, token ring cards, fiber distributed data interface (FDDI) cards, wireless local area network (WLAN) cards, radio transceiver cards, and/or other well-known network devices. The network connectivity devices 392 may provide wired communication links and/or wireless communication links (e.g., a first network connectivity device 392 may provide a wired communication link and a second network connectivity device 392 may provide a wireless communication link). Wired communication links may be provided in accordance with Ethernet (IEEE 802.3), Internet protocol (IP), time division multiplex (TDM), data over cable service interface specification (DOCSIS), wavelength division multiplexing (WDM), and/or the like. In an embodiment, the radio transceiver cards may provide wireless communication links using protocols such as code division multiple access (CDMA), global system for mobile communications (GSM), long-term evolution (LTE), WiFi (IEEE 802.11), Bluetooth, Zigbee, narrowband Internet of things (NB loT), near field communications (NFC), and radio frequency identity (RFID). The radio transceiver cards may promote radio communications using 5G, 5G New Radio, or 5G LTE radio communication protocols. These network connectivity devices 392 may enable the processor 382 to communicate with the Internet or one or more intranets. With such a network connection, it is contemplated that the processor 382 might receive information from the network, or might output information to the network in the course of performing the above-described method steps. Such information, which is often represented as a sequence of instructions to be executed using processor 382, may be received from and outputted to the network, for example, in the form of a computer data signal embodied in a carrier wave.

Such information, which may include data or instructions to be executed using processor 382 for example, may be received from and outputted to the network, for example, in the form of a computer data baseband signal or signal embodied in a carrier wave. The baseband signal or signal embedded in the carrier wave, or other types of signals currently used or hereafter developed, may be generated according to several methods well-known to one skilled in the art. The baseband signal and/or signal embedded in the carrier wave may be referred to in some contexts as a transitory signal.

The processor 382 executes instructions, codes, computer programs, scripts which it accesses from hard disk, floppy disk, optical disk (these various disk based systems may all be considered secondary storage 384), flash drive, ROM 386, RAM 388, or the network connectivity devices 392. While only one processor 382 is shown, multiple processors may be present. Thus, while instructions may be discussed as executed by a processor, the instructions may be executed simultaneously, serially, or otherwise executed by one or multiple processors. Instructions, codes, computer programs, scripts, and/or data that may be accessed from the secondary storage 384, for example, hard drives, floppy disks, optical disks, and/or other device, the ROM 386, and/or the RAM 388 may be referred to in some contexts as non-transitory instructions and/or non-transitory information.

In an embodiment, the computer system 700 may comprise two or more computers in communication with each other that collaborate to perform a task. For example, but not by way of limitation, an application may be partitioned in such a way as to permit concurrent and/or parallel processing of the instructions of the application. Alternatively, the data processed by the application may be partitioned in such a way as to permit concurrent and/or parallel processing of different portions of a data set by the two or more computers. In an embodiment, virtualization software may be employed by the computer system 700 to provide the functionality of a number of servers that is not directly bound to the number of computers in the computer system 700. For example, virtualization software may provide twenty virtual servers on four physical computers. In an embodiment, the functionality disclosed above may be provided by executing the application and/or applications in a cloud computing environment. Cloud computing may comprise providing computing services via a network connection using dynamically scalable computing resources. Cloud computing may be supported, at least in part, by virtualization software. A cloud computing environment may be established by an enterprise and/or may be hired on an as-needed basis from a third-party provider. Some cloud computing environments may comprise cloud computing resources owned and operated by the enterprise as well as cloud computing resources hired and/or leased from a third-party provider.

In an embodiment, some or all of the functionality disclosed above may be provided as a computer program product. The computer program product may comprise one or more computer readable storage medium having computer usable program code embodied therein to implement the functionality disclosed above. The computer program product may comprise data structures, executable instructions, and other computer usable program code. The computer program product may be embodied in removable computer storage media and/or non-removable computer storage media. The removable computer readable storage medium may comprise, without limitation, a paper tape, a magnetic tape, magnetic disk, an optical disk, a solid state memory chip, for example analog magnetic tape, compact disk read only memory (CD-ROM) disks, floppy disks, jump drives, digital cards, multimedia cards, and others. The computer program product may be suitable for loading, by the computer system 700, at least portions of the contents of the computer program product to the secondary storage 384, to the ROM 386, to the RAM 388, and/or to other non-volatile memory and volatile memory of the computer system 700. The processor 382 may process the executable instructions and/or data structures in part by directly accessing the computer program product, for example by reading from a CD-ROM disk inserted into a disk drive peripheral of the computer system 700. Alternatively, the processor 382 may process the executable instructions and/or data structures by remotely accessing the computer program product, for example by downloading the executable instructions and/or data structures from a remote server through the network connectivity devices 392. The computer program product may comprise instructions that promote the loading and/or copying of data, data structures, files, and/or executable instructions to the secondary storage 384, to the ROM 386, to the RAM 388, and/or to other non-volatile memory and volatile memory of the computer system 700.

In some contexts, the secondary storage 384, the ROM 386, and the RAM 388 may be referred to as a non-transitory computer readable medium or a computer readable storage media. A dynamic RAM embodiment of the RAM 388, likewise, may be referred to as a non-transitory computer readable medium in that while the dynamic RAM receives electrical power and is operated in accordance with its design, for example during a period of time during which the computer system 700 is turned on and operational, the dynamic RAM stores information that is written to it. Similarly, the processor 382 may comprise an internal RAM, an internal ROM, a cache memory, and/or other internal non-transitory storage blocks, sections, or components that may be referred to in some contexts as non-transitory computer readable media or computer readable storage media.

While several embodiments have been provided in the present disclosure, it should be understood that the disclosed systems and methods may be embodied in many other specific forms without departing from the spirit or scope of the present disclosure. The present examples are to be considered as illustrative and not restrictive, and the intention is not to be limited to the details given herein. For example, the various elements or components may be combined or integrated in another system or certain features may be omitted or not implemented.

Also, techniques, systems, subsystems, and methods described and illustrated in the various embodiments as discrete or separate may be combined or integrated with other systems, modules, techniques, or methods without departing from the scope of the present disclosure. Other items shown or discussed as directly coupled or communicating with each other may be indirectly coupled or communicating through some interface, device, or intermediate component, whether electrically, mechanically, or otherwise. Other examples of changes, substitutions, and alterations are ascertainable by one skilled in the art and could be made without departing from the spirit and scope disclosed herein.

## Claims

1. A method performed by an inventory system to perform inventory tracking and control in a warehouse, wherein the method comprises:
emitting, by an antenna system of the inventory system, first signals into an area of the warehouse, wherein the area comprises a plurality of items each coupled to tag;
receiving, by a reader device of the inventory system, data from each tag coupled to the items, wherein the data includes the information related to a location of each of the items;
determining, by an inventory application executing on a computer of the inventory system and communicatively coupled to the reader device, one or more clusters of items based on the location of each of the items, wherein a cluster of the one or more clusters comprises a subset of the items located within a distance from a centroid location;
determining, by the inventory application, cluster data describing the cluster and the subset of items in the cluster;
adjusting, by the inventory application, an antenna setting of at least one antenna in the antenna system based on the cluster data and a predictive model to emit cluster-focused signals towards the cluster;
emitting, by the at least one antenna of the antenna system, the cluster-focused signals towards the cluster based on the centroid location and the predictive model;
adjusting, by the inventory application, the reader device based on the cluster data, the adjustment to the antenna setting, and the predictive model; and
receiving, by the reader device, cluster-focused data from the tags coupled to the subset of items in the cluster.

2. The method of claim 1, further comprising:
determining, by the inventory application, a quantity of the subset of items;
determining, by the inventory application, a material of each item in the subset of items; or
determining, by the inventory application, a location of each item in the subset of items relative to the centroid location, wherein the location of each item indicates a location of a box or a location of a conveyor belt.

3. The method of claim 1, wherein the predictive model is trained based on known items within each of the one or more clusters.

4. The method of claim 1, wherein the antenna setting comprises at least one of a type of the cluster-focused signals, a frequency range of the cluster-focused signals, a position of the at least one antenna, an orientation of the at least one antenna, an antenna gain of the at least one antenna, or a transmit power of the at least one antenna.

5. The method of claim 1, wherein the reader device setting comprises at least one of a type of the cluster-focused signals, a frequency range of the cluster-focused signals, a position of the reader device, directional settings of the antenna system connected to the reader device, or an output power of the reader device.

6. The method of claim 1, further comprising determining, by the inventory application using the predictive model, at least one of:
determining whether the subset of items included in the cluster is correct;
determining whether the subset of items included in the cluster includes an incorrect item; or
determining whether the subset of items included in the cluster is missing an item that should be in the cluster.

7. The method of claim 1, further comprising determining, by the inventory application, that the cluster of items is moving along a conveyor belt at a speed and in a direction towards an area of the warehouse, and
wherein adjusting, by the inventory application, the antenna setting of the at least one antenna in the antenna system based on the cluster data and the predictive model comprises adjusting, by the inventory application, the antenna setting of the at least one antenna in the antenna system based on the speed and the direction of movement of the cluster of items, wherein the antenna setting is at least one of an orientation of the at least one antenna or a position of the at least one antenna.

8. The method of claim 1, further comprising determining, by the inventory application, that the cluster of items is moving along a conveyor belt at a speed and in a direction towards an area of the warehouse, and
wherein adjusting, by the inventory application, the reader device setting of the reader device based on the cluster data, the adjustment to the antenna setting, and the predictive model comprises:
adjusting, by the inventory application, the reader device setting of the reader device based on the speed and the direction of movement of the cluster of items,
wherein the reader device is at least one of a directional setting of the antenna system connected to the reader device or a position of the reader device.

9. A method performed by an inventory system to perform inventory tracking and control in a warehouse, wherein the method comprises:
receiving, by a reader device of the inventory system, data from a plurality of tags coupled to a plurality of items moving along a conveyor belt in the warehouse, wherein the data includes information related to a location of each of the items;
determining, by an inventory application executing on a computer system of the inventory system and communicatively coupled to the reader device, one or more clusters of items based on the location of each of the items, wherein a cluster of the one or more clusters comprises a subset of the items located within a distance from a centroid location;
determining, by the inventory application, cluster data describing the cluster and the subset of items in the cluster;
emitting, by at least one antenna of an antenna system, signals towards the cluster based on the centroid location;
adjusting, by the inventory application, a reader device setting of the reader device based on the cluster data and predictive model to optimize cluster-focused data received from the tags coupled to the subset of items in the cluster, wherein the reader device setting comprises at least one of a type of the signals, a frequency range of the signals, a position of the reader device, directional settings of the antenna system connected to the reader device, or an output power of the reader device; and
receiving, by the reader device, the cluster-focused data from the tags coupled to the subset of items in the cluster.

10. The method of claim 9, wherein the signals and the cluster-focused data are radio frequency identification, RFID, signals.

11. The method of claim 9, wherein determining, by the inventory application, the one or more clusters of items based on the location of each of the items comprises:
determining, by the inventory application using the predictive model, one or more centroids based on the location of each of the items moving along the conveyor belt, wherein each of the one or more centroids represents a center point of the one or more clusters of items; and
determining, by the inventory application, the one or more clusters of items based on the one or more centroids and the subset of items positioned within a range of the one or more centroids,
wherein the predictive model is a k-means algorithm.

12. The method of claim 9, wherein determining, by the inventory application, the cluster data comprises determining, by the inventory application, a quantity of the subset of items, and wherein the method further comprises determining, by the inventory application, whether the quantity of the subset of items included in the cluster is correct based on a known quantity of items that should be included in the cluster.

13. The method of claim 9, wherein determining, by the inventory application, the cluster data comprises determining, by the inventory application, a material of each item in the subset of items, and wherein adjusting, by the inventory application, the reader device setting of the reader device based on the cluster data, the predictive model, and the position on the conveyor belt comprises increasing a transmit power of the reader device when the material is metal.

14. The method of claim 11, wherein, before emitting the signals towards the cluster, the method further comprises adjusting, by the inventory application, an antenna setting of at least one antenna in the antenna system based on the cluster data and the predictive model to emit cluster-focused signals towards the cluster.

15. An inventory system, comprising:
a reader device configured to receive data from a plurality of tags coupled to a plurality of items moving along a conveyor belt in a warehouse, wherein the data includes information related to a location of each of the items;
an antenna system comprising at least one antenna;
at least one processor;
at least one memory coupled to the processor;
an inventory application communicatively coupled to the reader device and stored in the at least one memory, which when executed by the at least one processor, causes the inventory system to perform the method of any of claims 9 to 14.
